# FASCICULE DE BREVET EUROPEEN

(11) **EP 1 351 106 B1**
(45) Date de publication et mention de la délivrance du brevet: **06.01.2010**
(21) Numéro de dépôt: 02076348.8
(22) Date de dépôt: 04.04.2002
(51) Int. Cl.: G04B 37/04, G04B 37/14

(54) **Dispositif d'encliquetage**
Schnappverbindungsvorrichtung
Snap-fit connection device

(43) Date de publication de la demande: 08.10.2003
(73) Titulaire: The Swatch Group Management Services AG, 2501 Biel (CH)
(72) Inventeur: Nussbaum, Augustin, 2000 Neuchâtel (CH)
(74) Mandataire: Couillard, Yann Luc Raymond

(56) Documents cités:
- EP-A- 0 714 051
- US-A- 5 951 193

## Description

La présente invention concerne un organe d'encliquetage pour maintenir un premier élément relativement à un second élément, comportant une tête agencée pour coopérer avec le second élément, une extrémité opposée à la tête, et une portion intermédiaire déformable de manière élastique dans une direction longitudinale dudit organe et faite d'une seule pièce avec la tête et l'extrémité opposée.

Plus précisément, sous un premier aspect, la présente invention concerne une goupille dont l'extrémité opposée forme une queue, agencée pour être disposée dans un évidement ménagé dans le premier élément.

Des dispositifs similaires sont connus de l'art antérieur dans des domaines d'applications divers, comme par exemple dans le domaine de l'horlogerie.

En effet, le certificat d'addition N° 41 060 au brevet FR 712 868 délivré à René-Alfred Chauvot, décrit l'utilisation de goupilles dans une montre dont le boîtier est susceptible de coulisser dans son support et peut se retourner complètement sur lui-même. Plus précisément, ce document décrit deux types de goupilles légèrement différentes et remplissant des fonctions distinctes. Des "ergots-pivots", l'un d'eux étant représenté sur la figure 6 du certificat d'addition susmentionné, sont disposés dans le boîtier de la montre et présentent des parties saillantes prévues pour coulisser dans des rainures correspondantes du support. D'autre part, des "organes d'encliquetage" à bille, illustrés en figure 5 du même document, sont également disposés saillants dans le boîtier pour assurer son maintien dans le support lorsqu'il se trouve dans ses positions de repos.

Ces deux dispositifs présentent des structures respectives similaires comme on peut le constater sur les figures précitées du certificat d'addition. Chacun de ces dispositifs comporte en effet une enveloppe cylindrique logée à force dans un trou cylindrique ménagé dans un premier élément, ici le boîtier de la montre. Un ressort de type hélicoïdal est disposé dans l'enveloppe cylindrique, une première de ses extrémités étant en appui sur le fond du trou cylindrique, la seconde extrémité étant en appui contre la base d'un "ergot-pivot" ou contre une bille. En outre, on constate que les rebords supérieurs de chacune des enveloppes cylindriques sont repliés en direction de l'intérieur, de manière à permettre à une partie de l'ergot-pivot ou de la bille de présenter une portion saillante par rapport à l'enveloppe tubulaire, tout en empêchant leur éjection complète.

Le dispositif à ergot-pivot est typiquement utilisé dans des applications nécessitant un guidage dans le mouvement d'un premier élément par rapport à un second élément, le mouvement étant du type rotation et/ou coulissement.

D'autre part, le dispositif à bille est typiquement utilisé comme organe d'encliquetage. En effet, le remplacement de l'ergot par une bille facilite le glissement d'un second élément suivant la surface du premier élément au niveau de l'organe d'encliquetage. Cet avantage est notamment obtenu du fait de la capacité de la bille à tourner sur elle-même, c'est pourquoi cette dernière variante est typiquement mise en oeuvre dans les dispositifs pour lesquels les opérations d'encliquetage sont fréquentes.

Toutefois, la structure générale qui vient d'être décrite présente un inconvénient en ce qu'elle nécessite une pluralité de constituants, ce qui se révèle coûteux lorsqu'il s'agit d'en fabriquer un nombre important, à la fois en termes de fabrication desdits constituants et de montage.

Sous un second aspect, la présente invention concerne un organe d'encliquetage dont la tige au moins est susceptible d'être logée dans un trou traversant du premier élément, la tête et l'extrémité opposée étant respectivement agencées pour coopérer respectivement avec un premier et un second évidement qui sont ménagés dans le second élément.

Plus précisément, un tel organe peut être mis en oeuvre, par exemple, pour la réalisation d'une barrette de fixation pour bracelet de montre. La demande de brevet allemand N° 31 34 761 décrit un dispositif répondant aux caractéristiques susmentionnées. En effet, ce document décrit une barrette métallique de fixation de bracelet de montre réalisée d'une seule pièce. Dans la variante représentée sur la figure 2 de cette demande de brevet, la partie centrale de la tige présente une structure ondulée, autrement dit elle présente une succession de courbes contenues dans un même plan. Par conséquent, la partie centrale de la tige présente des propriétés élastiques, notamment dans la direction de sa longueur, ce qui permet l'insertion de ses extrémités par encliquetage dans les logements de la boîte de montre prévus à cet effet. Il est prévu de réaliser cette barrette de bracelet de montre notamment à l'aide d'une presse.

Toutefois ce dispositif présente certains inconvénients, tels qu'un encombrement perfectible. En effet, les propriétés élastiques de la structure décrite sont obtenues par une forme sinueuse de la tige dans un plan, ce qui a pour conséquence que les dimensions latérales de la barrette finalement obtenue ne sont pas négligeables, en particulier dans le cadre d'une application à des barrettes de bracelet de montre. En outre, on constate, sur la figure 2 de la demande de brevet précitée, que les extrémités de la barrette ne sont pas maintenues dans des positions fixes par rapport au bracelet dans lequel elle est positionnée. Celles-ci peuvent se déplacer soit sous l'effet de la rotation de la barrette sur elle-même, soit du fait d'une déformation élastique latérale de la tige en l'absence de tout guidage latéral.

Un premier but de la présente invention est de perfectionner les organes d'encliquetage des types précités en apportant une simplification de leur structure et de leur montage, ainsi qu'un encombrement réduit.

Dans ce but, l'invention prévoit notamment un organe d'encliquetage selon la revendication 1.

L'encombrement transversal maximal de l'organe d'encliquetage selon l'invention est donc défini par les dimensions transversales respectives de la tête et de l'extrémité opposée à la tête. Ainsi, la tige dispose d'un espace suffisant autour de sa périphérie pour pouvoir être compressée dans la direction de sa longueur, malgré certaines déformations transversales accompagnant la compression.

Dans un mode de réalisation préféré, l'organe d'encliquetage selon l'invention est réalisé par un moulage conventionnel de matière plastique, l'élasticité longitudinale de la tige lui étant conférée par sa structure particulière. A cet effet, la tige présente préférablement une forme cylindrique et comporte une pluralité d'ouvertures transversales suivant sa longueur, lui permettant d'être comprimée dans les limites de l'élasticité du matériau retenu pour sa fabrication.

En outre, l'organe d'encliquetage selon l'invention comporte préférablement des moyens de guidage latéral, formés par des bourrelets cylindriques à titre d'exemple, lui permettant de présenter une stabilité latérale importante par rapport à son logement.

On obtient ainsi un organe d'encliquetage au fonctionnement équivalent à ceux de l'art antérieur précité, mais présentant un coût de fabrication moindre et un montage beaucoup plus simple. De plus, l'organe d'encliquetage selon l'invention permet d'assurer un positionnement relatif précis de deux éléments.

Un objet supplémentaire de la présente invention concerne un dispositif d'encliquetage comportant notamment l'organe d'encliquetage décrit ci-dessus associé à un premier et un second élément nécessitant d'être positionnés l'un relativement à l'autre.

L'invention sera mieux comprise à l'aide de la description suivante de différents exemples d'exécution en référence aux dessins annexés, dans lesquels :
- la figure 1 est une vue en perspective de l'organe d'encliquetage selon un premier aspect de la présente invention;
- la figure 2 est une vue en perspective d'un exemple de construction mécanique simple comprenant le dispositif d'encliquetage selon la présente invention;
- la figure 3 est une vue en coupe de la construction de la figure 2, illustrant le fonctionnement du dispositif d'encliquetage selon la présente invention; et
- la figure 4 est une vue en perspective de l'organe d'encliquetage selon un second aspect de la présente invention.

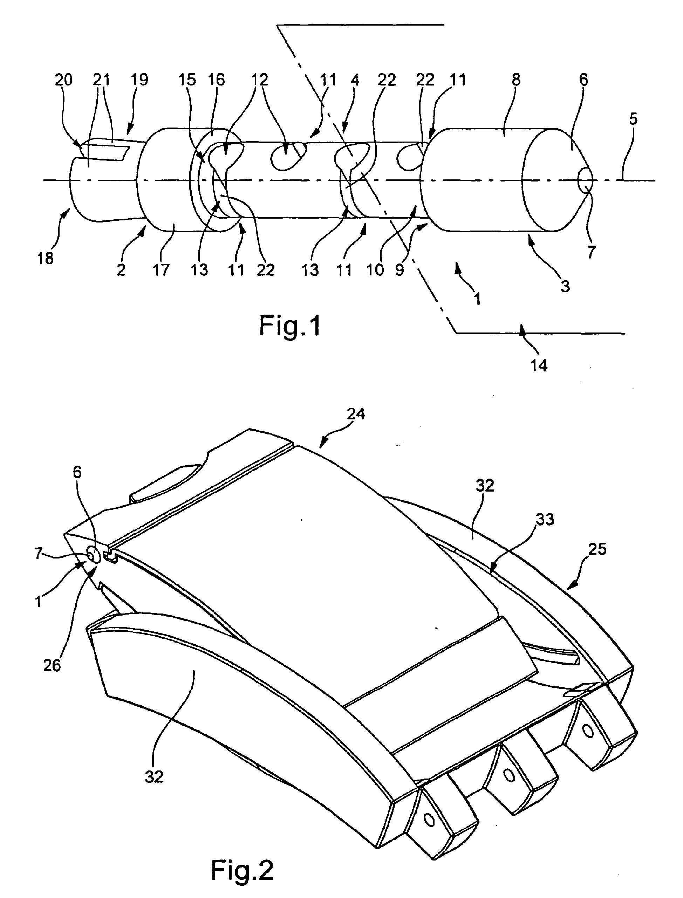

Les figures 1 à 3 illustrent respectivement la structure et le fonctionnement d'un organe d'encliquetage 1 et du dispositif correspondant réalisés selon un premier aspect de la présente invention.

Sur la vue en perspective de la figure 1, on constate que l'organe d'encliquetage, encore appelé "goupille" ci-dessous, présente une forme générale cylindrique comportant trois portions principales, à savoir deux extrémités formant respectivement une queue 2 et une tête 3 délimitant une portion intermédiaire formant une tige 4.

Dans le mode de réalisation préféré représenté sur les figures, l'enveloppe de la goupille 1 selon l'invention présente une symétrie de révolution autour de l'axe 5.

Toutefois, on peut imaginer que certaines parties au moins de l'organe d'encliquetage présentent des sections d'autres formes, notamment rectangulaires ou carrées.

La tête 3 présente une forme principalement cylindrique avec une terminaison de type tronconique dans sa partie distale 6, dont la section diminue en direction de l'extrémité 7. La réalisation de la partie distale 6 de la tête 3 n'est pas limitée à la représentation des figures susmentionnées et un homme du métier saura trouver d'autres variantes permettant à la tête 3 de remplir sa fonction, comme par exemple en forme de calotte sphérique.

Derrière sa partie proximale cylindrique 8, la tête 3 se termine par un épaulement 9 conduisant à une réduction de section définissant ainsi une première extrémité de la tige 4, portant la référence 10. Ladite tige 4 présente une forme générale cylindrique, préférablement d'axe 5, telle que représentée sur la figure 1. On constate également que la tige 4 comporte quatre ouvertures transversales 11 similaires réparties sur sa longueur. Chacune de ces quatre ouvertures transversales 11 est composée d'un trou cylindrique 12 traversant la tige 4 de part en part, l'axe du trou cylindrique coupant préférablement l'axe 5 de la goupille 1, et d'une fente droite 13, dont le plan médian contient l'axe du trou cylindrique correspondant, s'étendant depuis ledit trou cylindrique 12 jusqu'à la périphérie de la tige 4. Comme cela apparaît sur la figure 1, le plan médian de la fente 13 est préférablement choisi orthogonal à l'axe 5 de la goupille et la largeur de la fente 13 est préférablement inférieure au diamètre du trou cylindrique 12 pour des raisons exposées plus bas.

En outre, les trous cylindriques 12 sont régulièrement espacés le long de la tige 4 et leurs axes respectifs sont tous parallèles entre eux, définissant un plan médian 14 de la goupille. Les fentes 13 successives sont situées alternativement de part et d'autre dudit plan médian 14 de la goupille.

La seconde extrémité 15 de la tige est délimitée par un épaulement annulaire 16 délimitant également la portion proximale 17 de la queue 2 de la goupille, cette dernière présentant une forme cylindrique de diamètre supérieur à celui de la tige 4.

La portion proximale cylindrique 17 est suivie, en direction de l'extrémité 18 de la goupille 1, d'une partie distale tronconique 19 de sections initiale et finale inférieures à celle de ladite portion proximale 17, la section finale étant supérieure à la section initiale.

Ladite partie tronconique 19 comporte une fente 20, dont les bords sont définis par deux plans parallèles entre eux et préférablement parallèles au plan médian 14 de la goupille. En particulier, le plan médian 14 de la goupille 1 est également un plan médian pour la fente 20. La présence de la fente 20 divise la portion distale 19 de la queue 2 en deux languettes 21, flexibles transversalement.

De préférence, la goupille 1 qui vient d'être décrite est réalisée en une seule pièce de matière plastique, par un moulage par injection de type conventionnel. Il convient de remarquer que le mode de réalisation illustré sur les figures présente une simplicité particulière en ce qui concerne le moule nécessaire à sa fabrication, qui ne nécessite pas l'utilisation de tiroirs, dans la mesure où toutes les génératrices des différentes ouvertures 11, 20 sont sensiblement parallèles. Le procédé étant conventionnel, il ne sera pas abordé plus en détail puisqu'un homme du métier saura adapter l'enseignement de la présente demande à ses propres besoins à l'aide de ses connaissances.

On déduit sans difficulté de la description qui précède que la tige 4 de la goupille présente des propriétés élastiques dans la direction de sa longueur, c'est-à-dire dans sa direction axiale 5. En effet, en fonction du type de plastique retenu pour la réaliser et du fait de la présence des ouvertures 11 disposées selon sa longueur, la goupille 1 selon la présente invention est capable de plus ou moins se déformer longitudinalement lorsqu'on exerce sur elle une force axiale. Dans la mesure où chaque matériau présente sa propre limite d'élasticité, il est nécessaire de prévoir des butées sur la goupille pour limiter l'amplitude maximale des déformations possibles en cas de forte compression. Dans le cas de la goupille 1 représentée sur la figure 1, des butées sont obtenues de manière très simple dans la mesure où elles sont directement formées par les parois 22 de chacune des fentes 13. En effet, la largeur des fentes 13 est préférablement ajustée de telle manière qu'une déformation d'amplitude telle que deux parois 22 opposées d'une fente 13 entrent en contact l'une avec l'autre soit possible sans entraîner de cassure ou de déformation permanente de la goupille 1. Bien entendu, un homme du métier ne rencontrera pas de difficulté particulière pour déterminer la largeur maximale des fentes 13 à réaliser en fonction du matériau qu'il aura retenu pour construire la goupille.

Bien entendu, la structure de l'organe d'encliquetage selon le premier aspect n'est pas limitée à ce qui vient d'être décrit. On peut, par exemple, utiliser des formes, des espacements ou un nombre différents d'ouvertures 11.

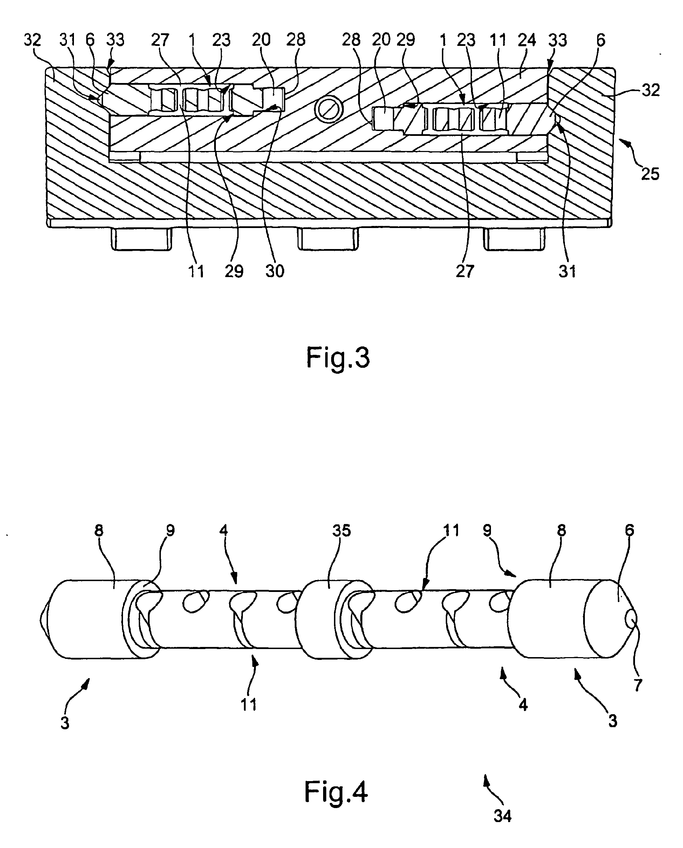

Les figures 2 et 3 représentent deux goupilles d'encliquetage 1 selon la figure 1, disposées dans une construction mécanique simple, de manière à en illustrer le fonctionnement.

Les deux goupilles d'encliquetage 1 sont disposées dans des trous 23 respectifs (visibles sur la figure 3) ménagés de part et d'autre d'un premier élément nécessitant d'être correctement positionné par rapport à un second élément.

La construction mécanique représentée sur les figures 2 et 3 correspond à une montre bracelet (le bracelet n'étant pas représenté) comportant un boîtier 24 susceptible de se retourner dans son support 25 pour présenter, sur le dessus, l'une ou l'autre de ses faces dans deux positions de repos respectives. Cette application correspond donc à celle décrite plus haut, en relation avec l'exposé de l'art antérieur relatif au premier aspect de la présente invention.

On distingue, sur la figure 2, l'extrémité 7 de la tête 3 de l'une des goupilles disposées dans le boîtier 24 de la montre, ladite extrémité 7 émergeant d'une surface 26 du boîtier. L'application représentée sur ces figures illustre l'utilisation des goupilles 1 en tant qu'organes d'encliquetage permettant de bloquer le boîtier 24 par rapport au support 25 dans l'une ou l'autre de ses deux positions de repos. La configuration représentée peut donc correspondre soit au début d'une opération de retournement du boîtier 24 faisant suite à son déblocage de son support 25, soit à la fin d'une opération de retournement qui va se terminer par un blocage du boîtier 24 dans son support 25 à l'aide desdites goupilles 1.

La figure 3 permet d'illustrer plus en détail le fonctionnement des goupilles 1. Des trous 23 borgnes sont ménagés dans le boîtier 24 de montre pour recevoir chacun une des deux goupilles de positionnement 1. Chacun de ces trous 23 comporte une première portion cylindrique 27 et, dans la région de son extrémité interne 28, un épaulement 29 conduisant à un rétrécissement de la section du trou jusqu'à ladite extrémité interne 28, formant une seconde portion cylindrique 30. La longueur totale de chacun de ces trous 23 est inférieure à la longueur totale de la goupille 1 de telle manière que seule la partie distale tronconique 6 de la tête 3 de la goupille en dépasse lorsque la goupille est en place et au repos. La longueur de la seconde portion 30 de chacun des trous 23 est légèrement supérieure à la longueur de la partie tronconique 19 de la queue 2 de la goupille correspondante. La diamètre de la seconde portion 30 du trou 23 est légèrement inférieur au diamètre le plus élevé de la partie tronconique 19 de la queue 2 de la goupille. Le diamètre de la première portion 27 du trou 23 est sensiblement supérieur au diamètre le plus important de la goupille 1, autrement dit au diamètre des parties proximales 8, 17 respectives de la tête 3 et de la queue 2.

On comprend donc que l'insertion d'une goupille dans son trou est effectuée par glissement suivant une pression axiale exercée par un opérateur sur la tête 3 de goupille en direction de l'intérieur du trou 23. Bien entendu, dans le cas présent cette insertion a lieu alors que le boîtier 24 de montre et son support 25 ne sont pas positionnés l'un en face de l'autre.

Lorsque la queue 2 de la goupille parvient au niveau de l'épaulement 29, l'opérateur doit exercer une pression axiale plus forte pour déformer de manière élastique les deux languettes 21 de la queue 2 de façon à permettre l'insertion de la partie tronconique 19 dans la région du trou proche de son extrémité interne 28. L'insertion de la goupille est alors stoppée par l'arrivée en butée de la partie proximale 17 de la queue de goupille contre l'épaulement 29. La goupille 1 est retenue en place dans son logement par friction de la portion distale 19 de sa queue contre la paroi de la seconde portion 30 du trou 23.

En fonction de la force de retenue souhaitée pour la goupille 1 dans son trou 23, l'insertion de la portion distale 19 de la queue dans la seconde portion 30 de son trou 23 peut être plus ou moins difficile. La pression de l'opérateur nécessaire dans certains cas peut donc entraîner une déformation importante de la goupille, cette pression étant typiquement plus forte que les pressions subies ultérieurement, lors de l'utilisation courante, par exemple dans des opérations d'encliquetage. C'est pourquoi il est nécessaire de prévoir des butées 22 dans les ouvertures 11 de la goupille, leur fonction première étant d'éviter une cassure de la goupille au moment de sa mise en place.

Une fois les goupilles 1 en place dans leurs trous 23 respectifs, elles peuvent assurer leur fonction d'organe d'encliquetage avec le support 25 du boîtier 24 de montre, avec un fonctionnement identique à celui précédemment décrit en relation avec le dispositif de l'art antérieur relatif au premier aspect de la présente invention. En effet, des évidements 31 sensiblement coniques sont ménagés dans chacune des parois latérales 32 du support 25 pour recevoir l'extrémité tronconique 6 saillante des têtes 3 de goupilles respectives, lorsque le boîtier 24 de la montre est disposé dans l'une de ses positions de repos. En outre, des chanfreins 33 sont ménagés sur les rebords supérieurs desdites parois latérales 32 pour faciliter la mise en place du boîtier 24 dans son support 25 en fin de mouvement de retournement. Ainsi, dans la configuration représentée sur la figure 2, lorsque le boîtier de la montre est abaissé pour être mis dans une position de repos, la portion tronconique 6 de chaque tête 3 de goupille entre en contact avec le chanfrein 33 de la paroi 32 du support correspondante. Une pression continue de l'opérateur a alors pour conséquence la génération d'une force de pression à composante axiale sur chacune des têtes 3 de goupilles. Lorsque ladite composante axiale présente une intensité suffisante, la tête 3 de chaque goupille force la tige 4 de goupille correspondante à se contracter, permettant ainsi à la tête 3 de rentrer complètement dans le trou 23 du boîtier. La tige 4 ne peut alors se décontracter et la tête 3 ne peut sortir du trou 23 qu'une fois que le boîtier 24 est complètement mis en place dans le support 25 et que son trou 23 de goupille se trouve en regard de l'évidement 31 correspondant dans le support. Le boîtier 24 est alors maintenu en place par encliquetage dans le support 25, dans la position de repos souhaitée.

En outre, les portions cylindriques 8, 17 respectives de la tête 3 et de la queue 2 de goupille jouent le rôle de bourrelets cylindriques en assurant un maintien radial de la goupille 1 dans son trou 23, tout en permettant à la tige 4 de se comprimer. En effet, lorsque la tige 4 se contracte, elle subit des déviations latérales par flexion de ses parties amincies, adjacentes aux ouvertures 11. Ces déviations sont rendues possibles du fait des différences de diamètres respectifs entre le trou 23 et la tige 4.

On constate donc que le dispositif selon la présente invention présente un fonctionnement identique aux dispositifs de l'art antérieur précités, mais de manière avantageuse par rapport à ceux-ci en ce que son nombre de constituants est plus faible, son encombrement réduit et son procédé de fabrication plus simple.

La figure 4 illustre un second aspect de l'organe d'encliquetage selon la présente invention. Ledit organe 34 présente une structure similaire à celle du premier mode de réalisation, les éléments communs étant de ce fait repérés par les mêmes références numériques.

Dans ce second mode de réalisation, le dispositif de positionnement, qui peut être qualifié de barrette 34, comporte deux têtes 3 dont les extrémités proximales 8 se terminant à l'arrière par des épaulements 9 délimitent une tige 4 de forme générale cylindrique. Comme précédemment, les têtes 3 comprennent chacune une portion proximale 8 cylindrique et une portion distale 6 tronconique, le diamètre de la portion cylindrique 8 étant supérieur au diamètre de la tige 4. La tige 4 comprend une pluralité d'ouvertures 11 similaires à celles du premier mode de réalisation, lesdites ouvertures 11 étant de préférence régulièrement espacées suivant la longueur de la tige 4. Ainsi, les contraintes subies par la tige lors des compressions sont réparties de manière sensiblement uniforme sur sa longueur.

La barrette 34 comporte en outre un bourrelet cylindrique 35 ménagé dans la région du milieu de la tige 4, présentant un diamètre sensiblement égal à celui des portions cylindriques 8 des têtes et contribuant au maintien radial de la tige 4 dans son trou (non représenté). On peut également prévoir que le diamètre du bourrelet 35 soit légèrement supérieur au diamètre du trou prévu pour recevoir la barrette 34, de telle manière que ledit bourrelet 35 assure également une fonction de retenue par friction de la barrette 34 dans son trou.

On peut bien entendu prévoir d'autres moyens de retenue de la barrette 34 dans son trou, comme par exemple une cheville transversale ou un cliquet, agencés dans le trou pour coopérer avec le bourrelet 35.

Pour illustrer une application de la barrette 34, on peut par exemple imaginer une configuration similaire à celle représentée sur la figure 3, dans laquelle on remplace les deux goupilles 1 selon le premier mode de réalisation par une seule barrette 34 selon le second mode de réalisation, disposée dans un trou cylindrique traversant le boîtier de montre 24 de part en part.

Bien entendu, cet exemple d'application a été donné à titre indicatif non limitatif et la barrette selon l'invention peut être utilisée dans toute application nécessitant l'utilisation de deux organes d'encliquetage disposés de part et d'autre d'un même élément ou d'une même partie d'un élément.

En particulier, on pourrait utiliser une telle barrette pour assurer la fonction des ergots (non représentés) utilisés pour maintenir le boîtier de montre 24 et lui permettre de coulisser dans les rainures de son support 25.

On peut notamment imaginer l'utilisation de l'organe d'encliquetage 34 selon le second mode de réalisation comme barrette de fixation d'un bracelet à la boîte d'une montre. Chaque tête pourrait se terminer par un ergot cylindrique au lieu de la partie tronconique 6. Dans ce cas, la montre correspondante serait classée dans une gamme de faibles prix, du fait de la fragilité supérieure du dispositif selon l'invention, réalisé en matière plastique, par rapport à une barrette métallique. Cet inconvénient de la barrette 34 est toutefois compensé par le faible coût de sa fabrication.

On peut noter que par rapport à la barrette métallique de l'art antérieur mentionné plus haut, la barrette 34 selon l'invention apporte une solution plus facile d'utilisation et plus stable. En effet, la structure commune des deux têtes 3 de la barrette 34 qui vient d'être décrite procure au dispositif une grande stabilité radiale du fait de la présence des portions cylindriques 8 ou bourrelets dont le diamètre est sensiblement ajusté à celui du trou du premier élément.

La description qui précède ne limite pas les domaines d'application possibles du dispositif selon la présente invention à l'horlogerie. En effet, ledit dispositif peut être utilisé dans tous les cas où des organes de positionnement ou d'encliquetage sont nécessaires et où la tête ne doit pas nécessairement présenter une très grande résistance latérale à la rupture.

On peut par exemple mettre en oeuvre la présente invention pour verrouiller toutes sortes de boîtiers plastiques présentant un capot ou un couvercle, tels que des boîtiers d'unités centrales d'ordinateurs, des habillages plastiques d'appareils domestiques ou portables, de jouets ou d'autres appareils similaires.

Bien entendu, la construction dudit dispositif n'est pas limitée aux modes de réalisation décrits, notamment en ce qui concerne les structures particulières décrites ou le choix des matériaux utilisés. On peut prévoir que l'organe d'encliquetage n'est pas strictement réalisé d'une seule pièce et que, par exemple, la tête est renforcée par un insert métallique ou un capuchon en matière dure.

## Revendications

1. Organe d'encliquetage (1, 34) pour maintenir un premier élément relativement à un second élément, ledit organe présentant un axe logitudinal (5) et étant fait en une seule pièce et comportant une tête (3) agencée pour coopérer avec le second élément, une extrémité opposée à la tête (2, 3) et une portion intermédiaire formée par une tige (4) dont la section, effectuée dans un plan perpendiculaire audit axe, est plus petite que celles de la tête (3) et de l'extrémité opposée (2, 3) **caractérisé en ce que** ladite tige (4) comporte une pluralité d'ouvertures (11) afin de la rendre déformable de manière élastique dans une direction longitudinale dudit organe.

2. Organe d'encliquetage selon la revendication 1, **caractérisé en ce que** la tige (4) est sensiblement rectiligne au repos.

3. Organe d'encliquetage selon la revendication 1 ou 2, **caractérisé en ce que** lesdites ouvertures sont transversales (11) suivant au moins une partie de la longueur de la tige (4), deux ouvertures (11) consécutives débouchant respectivement de part et d'autre d'un plan médian (14) de ladite tige (4).

4. Organe d'encliquetage selon la revendication 3, **caractérisé en ce que** chacune desdites ouvertures (11) comporte une première partie (12) sensiblement cylindrique, d'axe sensiblement contenu dans ledit plan médian (14), et une seconde partie (13) en forme de fente dont les génératrices sont sensiblement parallèles audit axe, ladite fente (13) s'étendant depuis ladite première partie (12) jusqu'à la périphérie de ladite tige (4).

5. Organe d'encliquetage selon l'une quelconque des revendications précédentes, **caractérisé en ce que** la tête (3) et l'extrémité opposée (2, 3) comportent en outre des moyens de guidage latéral (8, 17).

6. Organe d'encliquetage selon l'une quelconque des revendications précédentes, **caractérisé en ce qu'**il présente une forme générale à symétrie de révolution.

7. Organe d'encliquetage selon les revendications 5 et 6, **caractérisé en ce que** lesdits moyens de guidage latéral comprennent au moins deux bourrelets sensiblement cylindriques (8, 17) à distance l'un de l'autre le long dudit organe (1), lesdits bourrelets (8, 17) présentant des diamètres sensiblement égaux, supérieurs au diamètre de ladite tige (4).

8. Organe d'encliquetage selon l'une quelconque des revendications précédentes, **caractérisé en ce qu'**il est réalisé en matière plastique.

9. Organe d'encliquetage (1) selon l'une quelconque des revendications précédentes, **caractérisé en ce que** l'extrémité opposée à la tête (3) forme une queue (2) comportant des moyens de retenue axiale permettant de retenir par friction ledit organe (1) dans le premier élément.

10. Organe d'encliquetage (1) selon la revendication 9, **caractérisé en ce que** lesdits moyens de retenue axiale comprennent une région distale (19) de la queue (2), de forme tronconique et comportant au moins une fente longitudinal (20) formant des languettes (21) flexibles transversalement pour retenir l'organe (1) dans le premier élément (24).

11. Organe d'encliquetage (34) selon l'une quelconque des revendications 1 à 8, **caractérisé en ce que** l'extrémité opposée à ladite tête (3) forme une seconde tête (3) agencée pour coopérer avec le second élément.

12. Organe d'encliquetage (34) selon les revendications 7 et 11, **caractérisé en ce qu'**il comporte un bourrelet (35) de section sensiblement égale à la section maximale d'une tête (3) et situé sensiblement au milieu de la tige (4).

13. Dispositif d'encliquetage pour maintenir un premier élément (24) par rapport à un second élément (25), comprenant un évidement (31) ménagé dans le second élément et un organe d'encliquetage (1, 34) selon l'une des revendications précédentes, monté dans un trou (23) du premier élément de façon qu'une partie distale (6) de sa tête (3) puisse émerger d'une surface (26) du premier élément pour coopérer avec ledit évidement (31) du second élément.

14. Dispositif selon la revendication 13, **caractérisé en ce que** l'extrémité opposée à la tête (3) de l'organe d'encliquetage (1) forme une queue (2) comportant des moyens de retenue avale dudit organe (1) dans le premier élément, **en ce que** ledit trou (23) comporte, depuis la surface (26) du premier élément (24), une première portion (27) sensiblement cylindrique terminée par un épaulement (29) délimitant une seconde portion (30) sensiblement cylindrique, de diamètre plus petit que celui de la première portion, s'étendant jusqu'au fond (28) du trou (23) et, **en ce que** le diamètre de la seconde portion présente un diamètre légèrement inférieur au diamètre de la queue (2).

15. Dispositif selon les revendications 13 et 14, **caractérisé en ce que** ledit trou (23) est de forme cylindrique.

## Claims

1. Locking member (1, 34) for holding a first element relative to a second element, said member being made in a single piece and comprising a head (3) arranged for co-operating with the second element, one end opposite the head (2, 3) and an intermediate portion formed by a bar (4), which section is smaller than sections of the head (3) and of the opposite end (2, 3) **characterised in that** said bar (4) comprises a plurality of apertures (11) in order to make it able to be deformed resiliently in a longitudinal direction of said member.

2. Locking member according to claim 1, **characterised in that** the bar (4) is substantially rectilinear in the rest position.

3. Locking member according to claim 1 or 2, **characterised in that** said apertures are transverse apertures (11) along at least a part of the bar (4) length, two consecutive apertures (11) opening out respectively on either side of a median plane (14) of said bar (4).

4. Locking member according to claim 3, **characterised in that** each of said apertures (11) comprises a first substantially cylindrical part (12), whose axis is substantially contained in said median plane (14), and a second slot-shaped part (13) whose generating lines are substantially parallel to said axis, said slot (13) extending from said first part (12) as far as the periphery of said bar (4).

5. Locking member according to any of the preceding claims, **characterised in that** the head (3) and the opposite end (2, 3) further comprise lateral guide means (8, 17).

6. Locking member according to any of the preceding claims, **characterised in that** its general shape has rotational symmetry.

7. Locking member according to claims 5 and 6, **characterised in that** said lateral guide means comprise at least two substantially cylindrical bulges (8, 17) at a distance from each other along said member (1), said bulges (8, 17) having approximately equal diameters, greater than the diameter of said bar (4).

8. Locking member according to any of the preceding claims, **characterised in that** it is made of plastic material.

9. Locking member (1) according to any of the preceding claims, **characterised in that** the end opposite the head (3) forms a tail (2) comprising axial holding means permitting to restrain by friction said member (1) in the first element.

10. Locking member (1) according to claim 9, **characterised in that** said axial holding means comprise a distal region (19) of the tail (2), of truncated shape and comprising at least one longitudinal slot (20) forming tongues (21) that are flexible transversely to hold the member (1) in the first element (24).

11. Locking member (34) according to any of claims 1 to 6, **characterised in that** the end opposite said head (3) forms a second head (3) arranged to co-operate with the second element.

12. Locking member (34) according to claims 7 and 11, **characterised in that** it includes a bulge (35) of approximately equal section to the maximum section of a head (3) and located substantially in the middle of the bar (4).

13. Device for holding a first element (24) with respect to a second element (25), comprising a recess (31) arranged in the second element and a locking member (1, 34) according to any of the preceding claims, mounted in a hole (23) of the first element such that a distal portion (6) of its head (3) can emerge from a surface (26) of the first element to co-operate with said recess (31) of the second element.

14. Device according to claim 13, **characterised in that** the end opposite the head (3) of the locking member (1) forms a tail (2) comprising means for holding said member (1) axially in the first element, **in that** said hole (23) includes, from the surface (26) of the first element (24), a first substantially cylindrical portion (27) terminated by a shoulder (29) delimiting a second substantially cylindrical portion (30), of smaller diameter than that of the first portion, extending to the bottom (28) of the hole (23) and, **in that** the diameter of the second portion has a slightly smaller diameter than the diameter of the tail (2).

15. Device according to claims 13 and 14, **characterised in that** said hole (23) is of cylindrical shape.

## Patentansprüche

1. Einrastorgan (1, 34), um ein erstes Element relativ zu einem zweiten Element zu halten, wobei das Organ einteilig hergestellt ist und einen Kopf (3), der dazu ausgelegt ist, mit dem zweiten Element zusammenzuwirken, ein dem Kopf (2, 3) gegenüber liegendes Ende und einen Zwischenabschnitt, der durch einen Stift (4) gebildet ist, dessen Querschnitt kleiner ist als jene des Kopfes (3) bzw. des gegenüber liegenden Endes (2, 3), umfasst, **dadurch gekennzeichnet, dass** der Stift (4) mehrere Öffnungen (11) aufweist, um ihn in einer Längsrichtung des Organs elastisch verformbar zu machen.

2. Einrastorgan nach Anspruch 1, **dadurch gekennzeichnet, dass** der Stift (4) im Ruhezustand im Wesentlichen geradlinig ist.

3. Einrastorgan nach Anspruch 1 oder 2, **dadurch gekennzeichnet, dass** diese Öffnungen wenigstens auf einem Teil der Länge des Stifts (4) transversal (11) sind, wobei zwei aufeinander folgende Öffnungen (11) in die eine bzw. die andere Seite bezüglich einer Mittelebene (14) des Stifts (4) münden.

4. Einrastorgan nach Anspruch 3, **dadurch gekennzeichnet, dass** jede der Öffnungen (11) einen ersten Teil (12), der im Wesentlichen zylindrisch ist und dessen Achse im Wesentlichen in der Mittelebene (14) liegt, und einen zweiten Teil (13) in Schlitzform, dessen Erzeugende zu der Achse im Wesentlichen parallel sind, enthält, wobei sich der Schlitz (13) von dem ersten Teil (12) bis zum Umfang des Stifts (4) erstreckt.

5. Einrastorgan nach einem der vorhergehenden Ansprüche, **dadurch gekennzeichnet, dass** der Kopf (3) und das gegenüberliegende Ende (2, 3) außerdem seitliche Führungsmittel (8, 17) enthalten.

6. Einrastorgan nach einem der vorhergehenden Ansprüche, **dadurch gekennzeichnet, dass** es eine allgemeine rotationssymmetrische Form aufweist.

7. Einrastorgan nach den Ansprüchen 5 und 6, **dadurch gekennzeichnet, dass** die seitlichen Führungsmittel wenigstens zwei im Wesentlichen zylin-drische Wulste (8, 17) in gegenseitigem Abstand längs des Organs (1) umfassen, wobei diese Wulste (8, 17) im Wesentlichen gleiche Durchmesser aufweisen, die größer als der Durchmesser des Stifts (4) sind.

8. Einrastorgan nach einem der vorhergehenden Ansprüche, **dadurch gekennzeichnet, dass** es aus Kunststoff verwirklicht ist.

9. Einrastorgan (1) nach einem der vorhergehenden Ansprüche, **dadurch gekennzeichnet, dass** das dem Kopf (3) gegenüberliegende Ende ein hinteres Ende (2) bildet, das Axialhaltemittel enthält, die ermöglichen, das Organ (1) durch Reibung in dem ersten Element zu halten.

10. Einrastorgan (1) nach Anspruch 9, **dadurch gekennzeichnet, dass** die Axialhaltemittel einen distalen Bereich (19) des hinteren Endes (2) mit kegelstumpfförmiger Form aufweisen, der wenigstens einen longitudinalen Schlitz (20) enthält, der transversal flexible Zungen (21) bildet, um das Organ (1) in dem ersten Element (24) zu halten.

11. Einrastorgan (34) nach einem der Ansprüche 1 bis 8, **dadurch gekennzeichnet, dass** das dem Kopf (3) gegenüber liegende Ende einen zweiten Kopf (3) bildet, der dazu ausgelegt ist, mit dem zweiten Element zusammenzuwirken.

12. Einrastorgan (34) nach den Ansprüchen 7 und 11, **dadurch gekennzeichnet, dass** es einen Wulst (35) mit einem Querschnitt aufweist, der im Wesentlichen gleich dem maximalen Querschnitt eines Kopfes (3) ist und der sich im Wesentlichen in der Mitte des Stifts (4) befindet.

13. Einrastvorrichtung, um ein erstes Element (24) in Bezug auf ein zweites Element (25) zu halten, mit einer Aussparung (31), die in dem zweiten Element ausgebildet ist, und einem Einrastorgan (1, 34) nach einem der vorhergehenden Ansprüche, das in einem Loch (23) des ersten Elements montiert ist, derart, dass ein distaler Teil (6) des Kopfes (3) aus einer Oberfläche (26) des ersten Elements herauskommen kann, um mit der Aussparung (31) des zweiten Elements zusammenzuwirken.

14. Vorrichtung nach Anspruch 13, **dadurch gekennzeichnet, dass** das dem Kopf (3) gegenüber liegende Ende des Einrastorgans (1) ein hinteres Ende (2) bildet, das Axialhaltemittel des Organs (1) im ersten Element bildet, dass das Loch (23) ausgehend von der Oberfläche (26) des ersten Elements (24) einen ersten Abschnitt (27) umfasst, der im Wesentlichen zylindrisch ist und in einer Schulter (29) endet, die einen im Wesentlichen zylindrischen zweiten Abschnitt (30) begrenzt, dessen Durchmesser kleiner als jener des ersten Abschnitts ist und der sich bis zum Boden (28) des Lochs (23) erstreckt, und dass der Durchmesser des zweiten Abschnitts einen Durchmesser aufweist, der etwas kleiner ist als der Durchmesser des hinteren Endes (2).

15. Vorrichtung nach den Ansprüchen 13 und 14, **dadurch gekennzeichnet, dass** das Loch (23) eine zylindrische Form hat.
